# EUROPEAN PATENT APPLICATION

(11) **EP 4 837 790 A1**
(43) Date of publication of application: **11.11.2026**
(21) Application number: 26164933.9
(22) Date of filing: 16.03.2026
(51) Int. Cl.: B60R 21/232, B60R 21/2338

(54) **CURTAIN AIRBAG FOR VEHICLE**

(30) Priority: 07.05.2025 KR 20250058770
(71) Applicant: Hyundai Mobis Co., Ltd., Gangnam-gu Seoul 06141 (KR)
(72) Inventor: KANG, Dong Ho, Yongin-si, Gyeonggi-do 16891 (KR)
(74) Representative: Jung, Minkyu

(57) **Abstract**

An embodiment of the present disclosure discloses a curtain airbag configured to deploy in a lateral direction of a vehicle, including: a cushion body including an inner panel, an outer panel, a joint portion joined along a periphery of the inner panel and outer panel, and a partition portion that partitions an interior of the joint portion; and a tether that connects one side of the cushion body to a vehicle body so as to maintain a deployed shape of the cushion body when the cushion body is inflated, wherein the joint portion includes an upper joint portion, a lower joint portion, and a side joint portion, and wherein, when a vehicle collision occurs, the partition portion is configured to form a protection region that protects a head of an occupant moving toward a front of the vehicle while contacting the cushion body.

## Description

### CROSS-REFERENCE TO RELATED APPLICATIONS

This application claims the benefit of Korean Patent Application No. 10-2025-0058770, filed on May 07, 2025, in the Korean Intellectual Property Office, the entire disclosure of which is incorporated herein by reference in its entirety for all purposes.

### TECHNICAL FIELD

The present disclosure relates to a curtain airbag for a vehicle.

### BACKGROUND

In general, a vehicle is provided with various types of airbags for protecting an occupant in an event of an accident. Among them, a curtain airbag is mounted above a plurality of pillars disposed at sides of a front door and a rear door, respectively, and deploys downward in a lateral direction of the vehicle to protect an occupant when a vehicle rollover or side collision accident occurs.

As the National Highway Traffic Safety Administration (NHTSA) in the United States has introduced the oblique moving deformable barrier (OMDB) and the brain rotational injury criterion (BRIC) into a vehicle safety evaluation, there has been a problem in that a conventional curtain airbag is unable to fully restrain movement of the occupant, thereby causing occupant injury. In particular, although a head of the occupant should be controlled by the curtain airbag and a frontal airbag, there is a case in which stable restraint may not be achieved due to increased occupant movement toward an outward front direction of the vehicle during an oblique collision. Accordingly, there is a need to improve these issues. Accordingly, there is a need to improve these issues.

### SUMMARY

A technical object of the present disclosure is to provide a curtain airbag that improves occupant protection performance by stably restraining movement of an occupant and minimizing rotation of a head of the occupant.

The problems to be solved by the present disclosure are not limited to those described above, and other problems not mentioned herein will be clearly understood by those having ordinary skill in the art from the following description.

A curtain airbag configured to deploy in a lateral direction of a vehicle, according to an embodiment of the present disclosure, may include: a cushion body including an inner panel, an outer panel, a joint portion joined along a periphery of the inner panel and outer panel, and a partition portion that partitions an interior of the joint portion; and a tether that connects one side of the cushion body to a vehicle body so as to maintain a deployed shape of the cushion body when the cushion body is inflated, wherein the joint portion may include an upper joint portion, a lower joint portion, and a side joint portion, and wherein, when a vehicle collision occurs, the partition portion is configured to form a protection region that protects a head of an occupant moving toward a front of the vehicle while contacting the cushion body.

The partition portion may include: a first partition portion including a first-first partition wall and a first-second partition wall that extend from the lower joint portion and the upper joint portion, respectively, and forming a first active region between the first partition portion and the side joint portion; a second partition portion including a second-first partition wall and a second-second partition wall that extend from the lower joint portion and the upper joint portion, respectively, and forming a second active region between the second partition portion and the first partition portion; and a third partition portion including a third partition wall that extends from the lower joint portion and forming a third active region between the second partition portion and the third partition portion.

The protection region may extend across the second partition portion and the first partition portion from the third partition portion so as to connect the third active region, the second active region, and the first active region, and wherein the protection region may be configured to overlap a movement path of the head of the occupant moving toward the front of the vehicle.

The protection region may correspond to a space between a virtual line connecting an upper end of the first-first partition wall, an upper end of the second-first partition wall, and an upper end of the third partition wall, and a virtual line connecting a lower end of the first-second partition wall and a lower end of the second-second partition wall.

The upper end of the first-first partition wall, the upper end of the second-first partition wall, and the upper end of third partition wall may be disposed at a same level as, or a lower level than, a lower portion of the head of the occupant.

The first-first partition wall and the first-second partition wall may be disposed on a same line in a vertical direction of the cushion body, and the second-first partition wall and the second-second partition wall may be disposed on a same line in a vertical direction of the cushion body.

A thickness of the first active region, a thickness of the second active region, and a thickness of the third active region may be defined, respectively, by a distance between the first-first partition wall and the first-second partition wall, a distance between second-first partition wall and the second-second partition wall, and a distance between the third partition wall and the upper joint portion.

The first-first partition wall may accommodate a frontal airbag deploying in a front direction of the vehicle to provide an inactive region for securing a deployment space for the frontal airbag.

The tether may be fixed to the first partition portion on the outer panel.

The curtain airbag may further include a flat tether provided along the protection region on the inner panel.

According to an embodiment of the present disclosure, it is possible to provide a curtain airbag that can improve occupant protection performance by stably restraining movement of an occupant and minimizing rotation of a head of the occupant.

The effects of the present disclosure are not limited to those described above, and other effects not mentioned herein will be clearly understood by those having ordinary skill in the art from the following description.

### BRIEF DESCRIPTION OF THE DRAWINGS

FIG. 1 is a view illustrating a curtain airbag according to an embodiment of the present disclosure.
FIG. 2 is a view illustrating a partition portion partitioning an active region in the curtain airbag.
FIG. 3 is a view illustrating a protection region provided in the active region in the curtain airbag.
FIG. 4 is a view illustrating a deployment state of the curtain airbag and a frontal airbag.
FIG. 5 is a view illustrating a flat tether included in the curtain airbag.
FIG. 6 is a view illustrating a state in which bending deployment of a frontmost portion of the curtain airbag is implemented by the flat tether.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, the embodiments of the present disclosure will be described in detail with reference to the accompanying drawings. Like reference numerals refer to identical or corresponding elements throughout the drawings, and redundant description will be omitted.

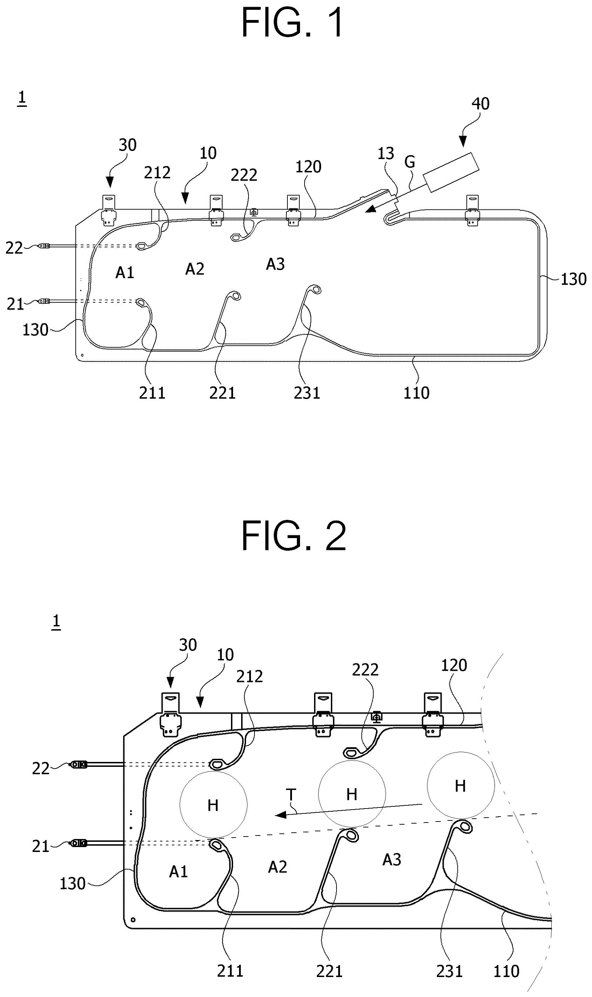

FIGS. 1 to 4 illustrate a curtain airbag according to an embodiment of the present disclosure.

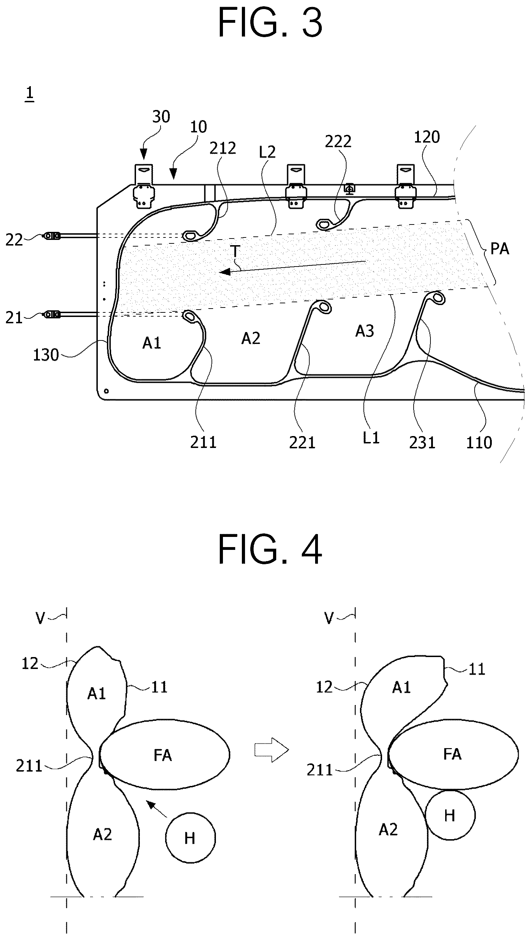

According to an embodiment of the present disclosure, a curtain airbag 1 is configured to deploy in a lateral direction of a vehicle V to protect an occupant. The curtain airbag 1 may also be configured to be in association with a frontal airbag FA that is configured to deploy in a front direction of vehicle V to restrain occupant movement (see FIG. 4). In an embodiment, the frontal airbag FA may be mounted within a crash pad or steering wheel of the vehicle (not shown).

Referring to the drawings, the curtain airbag 1 according to an embodiment of the present disclosure may include a cushion body 10 and a tether 20.

The cushion body 10 may be mounted to the vehicle body along an upper portion of a door of the vehicle (not shown). In an embodiment, the cushion body 10 may generally have a rectangular shape extending in a longitudinal direction of the vehicle and be fixed, in a roll-folded state, to the vehicle body along a roof-side rail (not shown) of the vehicle via mounting tabs 30.

A plurality of mounting tabs 30 may be provided along a longitudinal direction at an upper end of the cushion body 10. The mounting tabs 30 may fix the upper end of the cushion body 10 to the vehicle body.

The cushion body 10 may include an inner panel 11 and an outer panel 12 that are cut into a predetermined shape. The cushion body 10 may be formed by joining the inner panel 11 and the outer panel 12 in a flat state in which the panels face each other. In an embodiment, the inner panel 11 and the outer panel 12 may be made of a flexible fabric, but the material is not limited thereto.

As shown in the drawings, the cushion body 10 may include a joint portion 100 joined along peripheries of the inner panel 11 and the outer panel 12. The joint portion 100 may include a lower joint portion 110, an upper joint portion 120 and a pair of side joint portions 130.

An inner region enclosed by the lower joint portion 110, the upper joint portion 120, and the side joint portions 130 may correspond to an inflation region that inflates by gas G, whereas an outer region at an edge may correspond to a non-inflation region that does not inflate since the gas G is not injected therein.

The cushion body 10 may include a gas introduction portion 13 that is connected to the upper joint portion 120. The gas introduction portion 13 may be connected to an inflator 40, and the gas G that is generated in the inflator 40 may be supplied inside the cushion body 10 via the gas introduction portion 13.

Meanwhile, the cushion body 10 may include a partition portion 200 that partitions an interior of the joint portion 100. The partition portion 200 may include a first partition portion 210, a second partition portion 220, and a third partition portion 230, which may be disposed in sequence with respect to a front of the vehicle.

The first partition portion 210 may include a first-first partition wall 211 and a first-second partition wall 212 that extend from the lower joint portion 110 and the upper joint portion 120, respectively.

The first-first partition wall 211 may extend upward from the lower joint portion 110 and an end portion thereof may be bent forward. The first-second partition wall 212 may extend downward from the upper joint portion 120 and an end portion thereof may be bent forward. The first-first partition wall 211 and the first-second partition wall 212 may be disposed on the same line in a vertical direction of the cushion body 10.

To stably protect the occupant, when the cushion body 10 is inflated, the upper end of the first-first partition wall 211 may be disposed at the same level as, or a lower level than, a lower portion of a head of the occupant H. Accordingly, a problem in which the first-first partition wall 211 may fail to protect the head of the occupant H may be prevented.

The first partition portion 210 may form a first active region A1 between the first partition portion 210 and the front side joint portion 130. A first thickness of the first active region A1 may be defined by a first distance between the first-first partition wall 211 and the first-second partition wall 212. In addition, a width of the first active region A1 may be defined by a distance between the first partition portion 210 and the side joint portion 130.

In an embodiment, the first-first partition wall 211 may accommodate a frontal airbag FA deploying in a front direction of the vehicle and provide an inactive region for securing a deployment space of the frontal airbag FA.

As shown in FIG. 4, when a vehicle collision occurs, the curtain airbag 1 and the frontal airbag FA concurrently deploy, and one end portion of the frontal airbag FA, which deploys in a widthwise direction of the vehicle V, contacts the curtain airbag 1, which deploys in a front-rear direction of the vehicle V. At this time, the one end portion of the frontal airbag FA is accommodated and fixed within the inactive region provided by the first-first partition wall 211, such that the head of the occupant H is effectively restrained.

The second partition portion 220 may include a second-first partition wall 221 and a second-second partition wall 222 that extend from the lower joint portion 110 and the upper joint portion 120, respectively. The second-first partition wall 221 may extend upward from the lower joint portion 110 and an end portion thereof may be bent rearward. The second-second partition wall 222 may extend downward from the upper joint portion 120 and an end portion thereof may be bent forward. Further, the second-first partition wall 221 and the second-second partition wall 222 may be disposed on the same line in a vertical direction of the cushion body 10.

The second partition portion 220 may form a second active region A2 between the first partition portion 210 and the second partition portion 220. A second thickness of the second active region A2 may be defined by a second distance between the second-first partition wall 221 and the second-second partition wall 222. In addition, the width of the second active region A2 may be defined by a distance between the first partition portion 210 and the second partition portion 220.

To stably protect the occupant, when the cushion body 10 is inflated, the upper end of the second-first partition wall 221 may be disposed at the same level as, or a lower level than, a lower portion of the head of the occupant H.

The third partition portion 230 may include a third partition wall 231 that extends from the lower joint portion. The third partition wall 231 may extend upward from the lower joint portion 110 and an end portion thereof may be bent rearward.

To stably protect the occupant, when the cushion body 10 is inflated, the upper end of the third partition wall 231 may be disposed at the same level as, or a lower level than, a lower portion of the head of the occupant H.

The third partition portion 230 may form a third active region A3 between the second partition portion 220 and the third partition portion 230. A third thickness of the third active region A3 may be defined by a third distance between the third partition wall 231 and the upper joint portion 120. In addition, a width of the third active region A3 may be defined by a distance between the second partition portion 220 and the third partition portion 230.

In an embodiment, the third partition wall 231 may be disposed within a gap between an upper portion and a lower portion of the head of the occupant H. This is because the third active region A3, which includes the third partition portion 230, is the region that initially contacts the head of the occupant H. Accordingly, the third partition wall 231 is disposed within a gap between the upper portion and the lower portion of the head of the occupant H and a height thereof is designed to be the same level as, or a lower level than, the lower portion of the head of the occupant H.

The partition portion 200 as described above may be configured to contact the cushion body 10 when a vehicle collision occurs and thereby forms a protection region PA for protecting the head of the occupant H moving toward a front of the vehicle.

As shown in the drawings, the protection region PA may be configured to extend across the second partition portion 220 and the first partition portion 210 from the third partition portion 230 so as to connect the third active region A3, the second active region A2, and the first active region A1.

The protection region PA may correspond to a space between a first virtual line L1 connecting the upper end of the first-first partition wall 211, the upper end of the second-first partition wall 221 and the upper end of the third partition wall 231, and a second virtual line L2 connecting the lower end of the first-second partition wall 212 and the lower end of the second-second partition wall 222. In addition, the protection region PA may overlap a movement path T along which the head of the occupant H moves toward a front of the vehicle.

Since the protection region PA is provided along the movement path T along which the head of the occupant H moves toward a front in contact with the cushion body 10 in the vehicle, the protection region PA may not only protect the head of the occupant H from impacts, but also prevent rotation of the head of the occupant H, thereby providing effective protection to the occupant.

Meanwhile, the tether 20 connects one side of the cushion body 10 to the vehicle body, such that a deployed shape of the cushion body 10 is maintained when inflated.

One end of the tether 20 may be fixed to one end of the first partition portion 210 on the outer panel 12, and the other end thereof may be fixed to the vehicle body via a fixing means. For example, the tether 20 may be fixed to an A-pillar of the vehicle.

In an embodiment, the tether 20 may include a first tether 21 and a second tether 22. One end of the first tether 21 may be fixed to the first-first partition wall 211, while one end of the second tether 22 may be fixed to the first-second partition wall 212.

In an embodiment of the present disclosure, the tether 20 is illustrated to consist of both the first tether 21 and the second tether 22, but the tether 20 is not limited thereto. For example, the tether 20 may include one of the first tether 21 or the second tether 22.

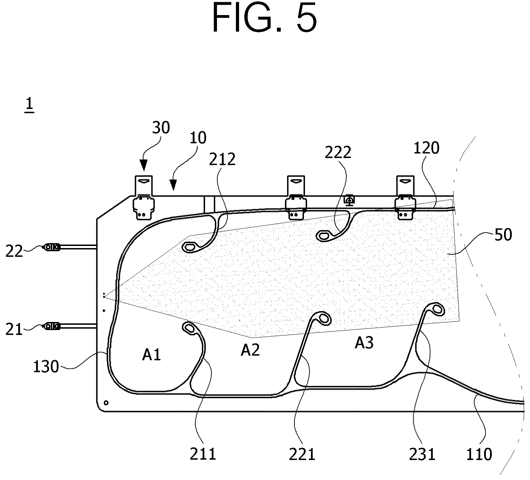

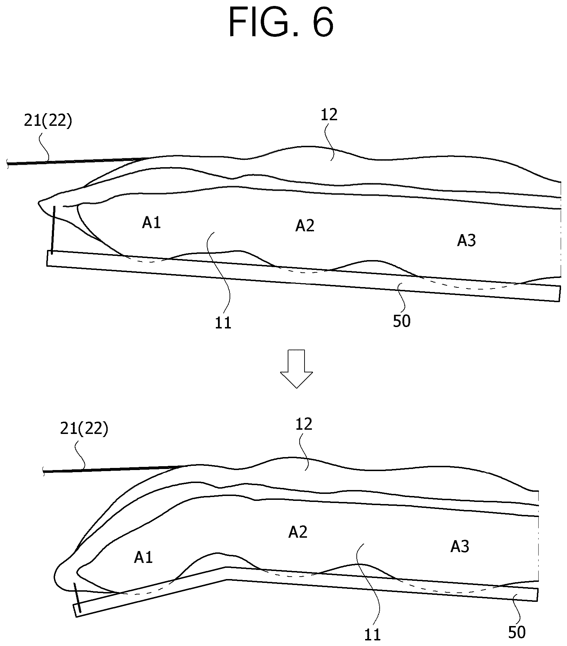

FIGS. 5 and 6 illustrate a curtain airbag according to another embodiment of the present disclosure. FIG. 5 is a view illustrating a flat tether included in the curtain airbag, while FIG. 6 is a view illustrating a state in which bending deployment of a frontmost portion of the curtain airbag is implemented by a flat tether.

Referring to the drawings, the curtain airbag 1 may further include a flat tether 50.

The flat tether 50 may be provided along the protection region PA on the inner panel 11 that contacts the head of the occupant H. The flat tether 50 may be applied along the movement path T along which the head of the occupant moves, such that the cushion body 10 flattens to form a flat surface when deployed. Accordingly, when the head H of the occupant contacts the flat tether 50 and moves along the flat tether 50, rotation thereof is minimized.

The flat tether 50 has a wide-band shape extending from the third active region A3 to the first active region A1 and may be made of a flexible fabric.

The flat tether 50 may be fixed, on the third active region A3, to the third partition wall 231 and the upper joint portion 120, respectively. In addition, the flat tether 50 may be fixed, on the second active region A2, to the second-first partition wall 221 and the second-second partition wall 222, respectively. Furthermore, the flat tether 50 may be fixed, on the first active region A1, to the first-second partition wall 212 and the side joint portion 130, respectively. However, the flat tether 50 may not be disposed over the first-first partition wall 211 and is thereby not fixed thereto. This prevents the flat tether 50 from covering the first-first partition wall 211 when the frontal airbag FA is accommodated within the first-first partition wall 211.

The flat tether 50 may control a deployed shape of the cushion body 10 in association with the tether 20 through a length adjustment. For example, the length of the flat tether 50 may be shortened such that tension generated by the flat tether 50 during deployment of the cushion body 10 causes the first active region A1 to bend inward, wherein the first active region A1 is bent along the first partition portion 210.

As described, by implementing a bending deployment of the frontmost portion of the cushion body 10 via the flat tether 50, occupant protection performance may be further improved in association with the frontal airbag FA. A degree of bending may be easily controlled by a length adjustment of the flat tether 50.

Despite the foregoing description with reference to the drawings, it will be understood by those having ordinary skill in the art that various modifications and alternations may be made without departing from the spirit or scope of the present disclosure. Furthermore, any variations arising from such modifications or alterations should be understood as intended to fall within the scope of the present disclosure as set forth in the appended claims.

Various embodiments of the present disclosure do not list all available combinations but are for describing a representative aspect of the present disclosure, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A curtain airbag for a vehicle, configured to deploy in a lateral direction of the vehicle and comprising:
a cushion body including an inner panel, an outer panel, a joint portion joined along a periphery of the inner panel and outer panel, and a partition portion that partitions an interior of the joint portion; and
a tether that connects one side of the cushion body to a vehicle body so as to maintain a deployed shape of the cushion body when the cushion body is inflated,
wherein the joint portion includes an upper joint portion, a lower joint portion, and a side joint portion, and
wherein, when a vehicle collision occurs, the partition portion is configured to form a protection region that protects a head of an occupant moving toward a front of the vehicle while contacting the cushion body.

2. The curtain airbag of claim 1, wherein the partition portion comprises:
a first partition portion including a first-first partition wall and a first-second partition wall that extend from the lower joint portion and the upper joint portion, respectively, and forming a first active region between the first partition portion and the side joint portion;
a second partition portion including a second-first partition wall and a second-second partition wall that extend from the lower joint portion and the upper joint portion, respectively, and forming a second active region between the second partition portion and the first partition portion; and
a third partition portion including a third partition wall that extends from the lower joint portion and forming a third active region between the second partition portion and the third partition portion.

3. The curtain airbag of claim 2, wherein:
the protection region extends across the second partition portion and the first partition portion from the third partition portion so as to connect the third active region, the second active region, and the first active region, and
the protection region is configured to overlap a movement path of the head of the occupant moving toward the front of the vehicle.

4. The curtain airbag of claim 2, wherein the protection region corresponds to a space between a first virtual line connecting an upper end of the first-first partition wall, an upper end of the second-first partition wall, and an upper end of the third partition wall, and a second virtual line connecting a lower end of the first-second partition wall and a lower end of the second-second partition wall.

5. The curtain airbag of any one of claims 2 to 4, wherein, when the cushion body is inflated, an upper end of the first-first partition wall, an upper end of the second-first partition wall, and an upper end of the third partition wall are configured to be disposed at a same level as, or a lower level than, a lower portion of the head of the occupant.

6. The curtain airbag of any one of claims 2 to 4, wherein, when the cushion body is inflated, the first-first partition wall and the first-second partition wall are disposed on a same line in a vertical direction of the cushion body, and the second-first partition wall and the second-second partition wall are disposed on a same line in a vertical direction of the cushion body.

7. The curtain airbag of any one of claims 2 to 6, wherein:
a first thickness of the first active region is defined by a first distance between the first-first partition wall and the first-second partition wall,
a second thickness of the second active region is defined by a second distance between the second-first partition wall and the second-second partition wall, and
a third thickness of the third active region is defined by a third distance between the third partition wall and the upper joint portion.

8. The curtain airbag of any one of claims 2 to 7, wherein the first-first partition wall accommodates a frontal airbag configured to deploy in a front direction of the vehicle, to provide an inactive region for securing a deployment space for the frontal airbag.

9. The curtain airbag of any one of claims 2 to 8, wherein the tether is fixed to the first partition portion on the outer panel.

10. The curtain airbag of any one of claims 1 to 9, further comprising a flat tether provided along the protection region on the inner panel.
